(19) **Europäisches Patentamt / European Patent Office / Office européen des brevets**

(11) **EP 3 940 442 B1**

(12) **EUROPEAN PATENT SPECIFICATION**

(45) Date of publication and mention
of the grant of the patent:
**12.02.2025 Bulletin 2025/07**

(21) Application number: **20907069.7**

(22) Date of filing: **21.12.2020**

(51) International Patent Classification (IPC):
*G02B 1/11* (2015.01)   *G02B 13/18* (2006.01)
*G02B 13/14* (2006.01)

(52) Cooperative Patent Classification (CPC):
**G02B 1/11; G02B 13/0045; G02B 13/14;
G02B 13/18; G02B 27/0012**

(86) International application number:
**PCT/CN2020/138088**

(87) International publication number:
**WO 2021/129577 (01.07.2021 Gazette 2021/26)**

(54) **OPTICAL IMAGING LENS AND IMAGING DEVICE**

**OPTISCHE BILDGEBUNGSLINSE UND BILDGEBUNGSVORRICHTUNG**

*LENTILLE D'IMAGERIE OPTIQUE ET DISPOSITIF D'IMAGERIE*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2019 CN 201911382075**

(43) Date of publication of application:
**19.01.2022 Bulletin 2022/03**

(73) Proprietor: **Jiangxi Lianchuang Electronic Co.,
Ltd.
Nanchang, Jiangxi 330096 (CN)**

(72) Inventors:
• **ZHANG, Xinyue
Nanchang, Jiangxi 330096 (CN)**
• **WANG, Kemin
Nanchang, Jiangxi 330096 (CN)**
• **ZENG, Jiyong
Nanchang, Jiangxi 330096 (CN)**

(74) Representative: **Klemm, Rolf et al
patentfactory Patentanwaltskanzlei Klemm
Franz-Reber-Weg 6
81479 München (DE)**

(56) References cited:
| | |
|---|---|
| WO-A1-2021/008319 | CN-A- 109 407 279 |
| CN-A- 109 407 279 | CN-A- 110 161 662 |
| CN-A- 110 161 662 | CN-U- 201 984 202 |
| JP-A- 2017 228 832 | JP-A- H09 218 350 |
| US-A1- 2011 279 915 | US-A1- 2019 179 119 |

**Description**

CROSS REFERENCE TO RELATED APPLICATION

This application claims priority to a Chinese application No. 201911382075.X, filed on December 27, 2019.

TECHNICAL FIELD

The disclosure relates to the field of lens imaging technologies, and more particularly, to an imaging device. The invention is set out in the appended set of claims.

BACKGROUND

With continuous development and advancement of automobile technology, a driving monitoring system (DMS) is constantly improved. The DMS uses images captured by an optical lens to detect the driving behavior and physiological state of the driver through visual tracking, target detection, motion recognition and other technologies. When the driver is tired, distracted, calling, smoking, not wearing a seat belt or in other dangerous situations, the DMS alarms the driver to avoid accidents. The DMS can effectively regulate the driving behavior of drivers, reduce accidents caused by human error and escort driving safety.

With the renewal and transformation of the DMS, more stringent requirements are put forward for the optical lens mounted in the DMS. On the one hand, in order to monitor a larger field of view and obtain sufficient edge information of captured images, the optical lens needs to have ultra-wide-angle and low distortion performance; on the other hand, in order to detect the driver's driving behavior and facial information effectively, it is necessary to select appropriate active light source for lighting to ensure that the DMS can operate normally during the day and night driving without affecting the driver's driving behavior. It is usually to add invisible near-infrared light to the active light source to meet requirements for night use. Therefore, the lens is required to have good imaging quality in both visible light range and near-infrared light range.

However, although some existing optical lenses have ultra-wide angles and good imaging performance in visible light range during daytime, the imaging performance in near-infrared light illumination system fails to meet the requirement.

CN110161662A (document D1) discloses a wide-angle lens including a first lens, a second lens, a third lens, a fourth lens, a fifth lens and a sixth lens which are sequentially arranged along the same optical axis from an object side to an image side and are all made of glass. A stop is provided between the third lens and the fourth lens. The first lens has negative refractive power, and has a convex object side surface and a concave image side surface. The second lens has negative refractive power, and has a concave object side surface and a concave image side surface. The third lens has positive refractive power, and has a convex object side surface and a convex image side surface. The fourth lens has negative refractive power, and has a concave object side surface and a concave image side surface. The fifth lens has positive refractive power, and has a convex object side surface and a convex image side surface. The sixth lens has positive refractive power, and a convex object side surface and a convex image side surface.

CN109407279A (document D2) discloses a wide-angle lens including a first lens group having a positive focal power, a second lens group having a positive focal power, and a diaphragm arranged between the first lens group and the second lens group. The three parts are arranged successively from the object side to the image side along the optical axis. The first lens group includes a first lens having a negative focal power, a second lens having a negative focal power, and a third lens having a positive focal power that are arranged successively from the object side to the image side. The second lens group includes a fourth lens having negative focal power, a fifth lens having positive focal power, and a sixth lens having positive focal power that are arranged successively from the object side to the image side. The lenses from the first lens to the sixth lens are glass lenses.

US20190179119A1 (document D3) discloses an imaging lens including a first lens having negative refractive power; a second lens having positive refractive power; a third lens having positive refractive power; a fourth lens having negative refractive power; a fifth lens; and a sixth lens having negative refractive power, arranged in this order from an object side to an image plane side.

SUMMARY

To solve the existing shortcomings, the present disclosure provides an imaging device, including an optical imaging lens and an imaging element, which has advantages of miniaturization, low distortion, and focusing visible light and near-infrared light in the same image plane. The invention is set out in the appended set of claims.

The additional aspects and advantages of the disclosure will be partially disclosed in the following description, and some will become obvious from the following description, or be understood through the embodiments of the disclosure.

BRIEF DESCRIPTION OF THE DRAWINGS

FIG. 1 is a schematic structural diagram of an optical imaging lens in a first embodiment of the disclosure;

FIG. 2 is a diagram showing field curvature curves of the optical imaging lens in the first embodiment of the disclosure, wherein the horizontal axis in the figure represents the defocusing distance (unit: millimeter), and the vertical axis represents the field angle (unit: degree);

FIG. 3 is a schematic diagram showing distortion of the optical imaging lens in the first embodiment of the disclosure, wherein the horizontal axis in the figure represents the distortion percent, and the vertical axis represents the field angle (unit: degree);

FIG. 4 is a diagram showing axial chromatic aberration curves of the optical imaging lens in light wavebands of 436nm-870nm, according to the first embodiment of the disclosure, wherein the horizontal axis in the figure represents the defocusing distance (unit: millimeter) and the vertical axis represents normalized pupil coordinates;

FIG. 5 is a diagram showing axial chromatic aberration curves of the optical imaging lens in light wavebands of 436nm-640nm, according to the first embodiment of the disclosure;

FIG. 6 is a diagram showing axial chromatic aberration curves of the optical imaging lens in light wavebands of 830nm-870nm, according to the first embodiment of the disclosure;

FIG. 7 is a schematic structural diagram of an optical imaging device, according to a second embodiment of the disclosure.

Main Reference Numerals:

| First lens | L1 | Fourth lens | L4 |
|---|---|---|---|
| Second lens | L2 | Fifth lens | L5 |
| Third lens | L3 | Sixth lens | L6 |
| Stop | ST | Filter | G1 |
| Object side surface of the first lens | S1 | Image side surface of the first lens | S2 |
| Object side surface of the second lens | S3 | Image side surface of the second lens | S4 |
| Object side surface of the third lens | S5 | Image side surface of the third lens | S6 |
| Object side surface of the fourth lens | S7 | Cemented surface of the fourth lens and the fifth lens | S8 |
| Image side surface of the fifth lens | S9 | Object side surface of the sixth lens | S10 |
| Image side surface of the sixth lens | S11 | Object side surface of the filter | S12 |
| Image side surface of the filter | S13 | Image plane | S14 |
| Imaging device | 200 | Imaging element | 210 |
| Optical imaging lens | 100 | | |

DETAILED DESCRIPTION OF PREFERRED EMBODIMENTS

In order to facilitate a better understanding of the disclosure, the disclosure will be further explained below with reference to the accompanying drawings. The embodiments of the disclosure are shown in the drawings, these embodiments are provided to make the disclosure more sufficient.

Unless otherwise defined, all technical and scientific terms used in the disclosure have the same meaning as commonly understood by those skilled in the art of the disclosure. The terms used in the specification of the disclosure herein are only for the purpose of describing specific embodiments.

Some existing optical lenses have ultra-wide angles and good imaging performance in visible light range during daytime, the imaging performance in near-infrared light illumination system fails to meet the requirement.

To solve the above problems, the disclosure provides an imaging device, including an optical imaging lens and an imaging element. From an object side to an image plane along an optical axis, the optical imaging lens sequentially includes a first lens, a second lens, a third lens, a stop, a fourth lens, a fifth lens, a sixth lens and a filter.

The first lens has a negative refractive power, an object side surface of the first lens is convex, an image side surface of the first lens is concave.

The second lens has a negative refractive power, an object side surface of the second lens is convex, an image side surface of the second lens is concave.

The third lens has a positive refractive power, an object side surface of the third lens and an image side surface of the third lens are both convex.

The fourth lens has a negative refractive power, an object side surface of the fourth lens and an image side surface of the fourth lens are both concave.

The fifth lens has a positive refractive power, and an object side surface of the fifth lens and an image side surface of the fifth lens are both convex. The fourth lens and the fifth lens form a cemented lens group.

The sixth lens has a positive refractive power, an object side surface of the sixth lens and an image side surface of the sixth lens are both convex.

The first lens, the second lens, the third lens, the fourth lens and the fifth lens are all glass spherical lenses; and the sixth lens is a glass aspherical lens.

The optical imaging lens provided in the disclosure meets the expression:

$$5.6 < TTL/ImgH < 6.4; \qquad (1)$$

where TTL represents a total optical length of the optical imaging lens, ImgH represents a half of the maximum diameter of an effective pixel area on the image plane of the optical imaging lens. Satisfying the expression (1) can enlarge the image plane of the optical imaging lens and compress a length of the optical imaging lens to make the lens more miniaturized and lightweight.

The optical imaging lens provided in the disclosure further meets the expression:

$$LCA/EFL < 2.500E\text{-}02; \qquad (2)$$

where LCA represents a longitudinal chromatic aberration of the optical imaging lens in light wavebands of 436nm-870nm, and EFL represents an effective focal length of the optical imaging lens.

The optical imaging lens provided in the disclosure further meets the expression:

$$LSA/EFL < 1.500E\text{-}02; \qquad (3)$$

where LSA represents a longitudinal spherical aberration of the optical imaging lens in light wavebands of 830nm-870nm, and EFL represents the effective focal length of the optical imaging lens. Satisfying the expression (2) and expression (3), a difference of positions of focal planes in the visible light waveband and the near-infrared light waveband can be limited within 3 $\mu$m, which effectively guarantees the good imaging quality of the lens in the visible light wavebands and the near-infrared light wavebands and ensures that the lens is confocal in the visible light and the near-infrared light.

The optical imaging lens provided in the disclosure further meets the expressions:

$$1.2 < R3/TTL < 2.4; \qquad (4)$$

$$0.6 < R5/TTL < 1.2; \qquad (5)$$

where R3 represents a radius of curvature of the object surface of the second lens, R5 represents a radius of curvature of the object surface of the third lens curvature, TTL represents the total optical length of the optical imaging lens. Satisfying the expressions (4) and (5) can change a relative position of a pupil image of a secondary reflection ghost image of the object surface of the second lens and the object surface of the third lens. By controlling the radius of curvature, the pupil image of the ghost image can be kept away from the focal plane, the relative energy value of the ghost image is reduced effectively, and imaging quality is improved.

The optical imaging lens provided in the disclosure further meets the expression:

$$0° < (CRA)_{max} < 4°; \qquad (6)$$

where $(CRA)_{max}$ represents a maximum incidence angle of chief rays on the image plane in a field of view of the optical imaging lens. Satisfying the expression (6) is beneficial to improve the MTF value of the entire field of view, so as to make MTF defocusing curves between different fields of view are more concentrated and make the captured image clearer.

The optical imaging lens provided in the disclosure further meets the expression:

$$5 < TTL/CT3 < 6; \qquad (7)$$

where CT3 represents a center thickness of the third lens on the optical axis, and TTL represents a total optical length of the optical imaging lens. In the disclosure, satisfying the expression (7), the field curvature of the optical lens can be better corrected by increasing the thickness of the third lens.

The optical imaging lens provided in the disclosure further meets the expression:

$$9 < TTL/T4 < 12; \qquad (8)$$

where T4 represents a distance between the stop and the fourth lens on the optical axis, and TTL represents a total optical length of the optical imaging lens. In the disclosure, satisfying the expression (8), by increasing the distance between the stop and the fourth lens, the backend optical system can be far away from the stop, and object side light beams of different fields of view converged behind the stop will diverge with a certain angle to be converged at a farther position of vertical axis, thereby increasing image height.

The optical imaging lens provided in the disclosure further meets the expression:

$$3.5 < Vd5/Vd4 < 4.5; \qquad (9)$$

where Vd4 represents an abbe number of the fourth lens, and Vd5 represents an abbe number of the fifth lens. Satisfying the expression (9), it is more benefit to eliminate the chromatic aberration by increasing the abbe number difference between the fourth lens and the fifth lens.

The optical imaging lens provided in the disclosure further meets the expressions:

$$-12° < |\phi 10| - \arctan\left[S10/(R10^2 - S10^2)^{1/2}\right] < 12°; \qquad (10)$$

$$-5° < |\phi 11| - \arctan\left[S11/(R11^2 - S11^2)^{1/2}\right] < 5°; \qquad (11)$$

where S10 represents a half of an effective diameter of the object side surface of the sixth lens, and S11 represents a half of an effective diameter of the image side surface of the sixth lens; $\phi 10$ represents a dip angle of the object surface of the sixth lens at the half of an effective diameter; $\phi 11$ represents a dip angle of the image side surface of the sixth lens at the half of an effective diameter; R10 represents a radius of curvature of the object side surface of the sixth lens, and R11 represents a radius of curvature of the image side surface of the sixth lens. In the disclosure, satisfying the expression (10) and expression (11) at the same time renders a changing trend of refractive power from a lens center to an edge of the sixth lens to be closer to the sine and cosine function. When the temperature changes, defocusing curves of all the fields of view will be more converged, which is beneficial to improve the temperature performance of the lens.

In the optical imaging lens proposed by the present disclosure, the above-mentioned filter is coated with a visible broadband anti-reflection layer and a near-infrared broadband anti-reflection layer. Through a special plating process, the visible broadband anti-reflection layer and the near-infrared broadband anti-reflection layer are coated on the filter, which can better meet characteristics of dual-bands pass of the lens in the visible light wavebands and the near-infrared light wavebands, so that the optical imaging lens in the present disclosure can meet imaging requirements in the visible light wavebands and the near-infrared light wavebands.

The shapes of aspheric surfaces of the lens provided by the embodiments of the disclosure satisfy the following equation:

$$|z = \frac{ch^2}{1+\sqrt{1-(1+K)c^2h^2}} + Bh^4 + Ch^6 + Dh^8 + Eh^{10} + Fh^{12}$$

where z represents a vector height between a position on the surface and a vertex of the surface along an optical axis of the lens, c represents a curvature of the vertex of the surface, K is a quadratic surface coefficient, h is a distance between the position on the surface and the optical axis, B is a fourth order surface coefficient, C is a sixth order surface coefficient, D is an eighth order surface coefficient, E is a tenth order surface coefficient, F is a twelfth order surface coefficient.

In some embodiments, the imaging element is used for converting an optical image formed by the optical imaging lens into electrical signals.

FIRST EMBODIMENT

A specific embodiment is used to describe the structure and composition of the optical imaging lens provided by the disclosure in more detail.

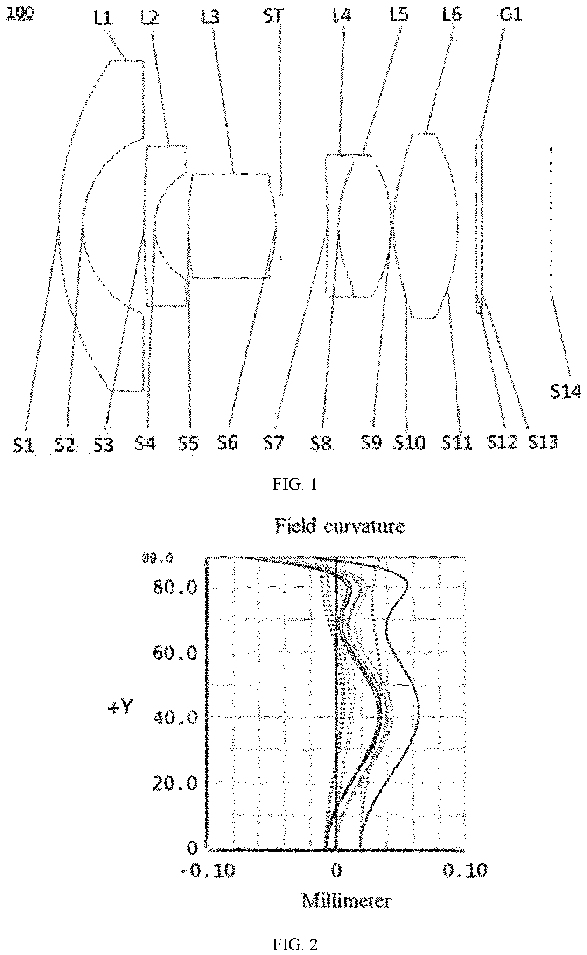

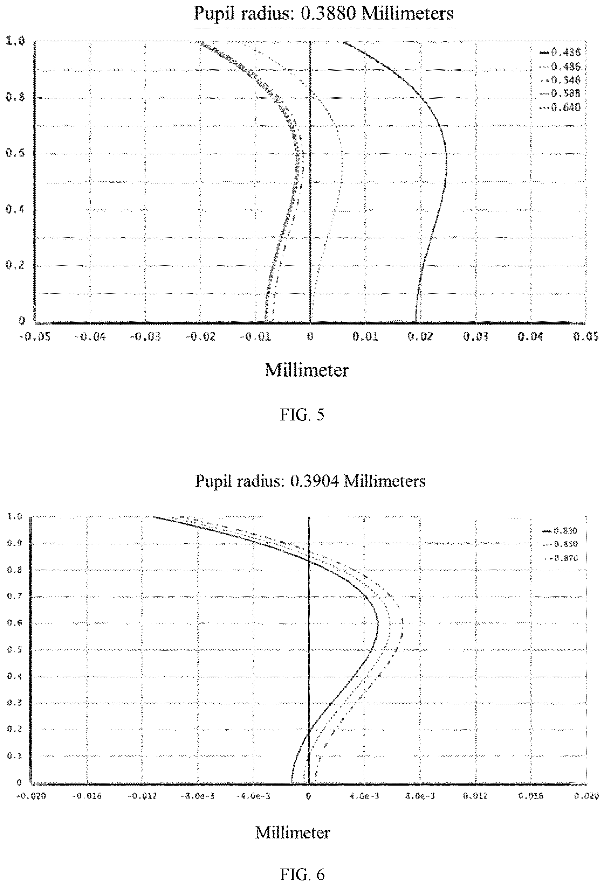

Please refer to FIG. 1 to FIG. 7. FIG. 1 illustrates the optical imaging lens provided in the first embodiment of the disclosure, from an object side to an image plane S14 along an optical axis thereof, sequentially includes: a first lens L1, a second lens L2, a third lens L3, a stop ST, a fourth lens L4, a fifth lens L5, a sixth lens L6 and a filter G1.

The first lens L1 has a negative refractive power, an object side surface S1 of the first lens L1 is convex, an image side surface S2 of the first lens L1 is concave.

The second lens L2 has a negative refractive power, an object side surface S3 of the second lens L2 is convex, an image side surface S4 of the second lens L2 is concave.

The third lens L3 has a positive refractive power, an object side surface S5 of the third lens L3 and an image side surface S6 of the third lens L3 are both convex.

The fourth lens L4 has a negative refractive power, an object side surface S7 of the fourth lens L4 and an image side surface S8 of the fourth lens L4 are both concave.

The fifth lens L5 has a positive refractive power, an object side surface S8 of the fifth lens L5 and an image side surface S9 of the fifth lens L5 are both convex; where the fourth lens L4 and the fifth lens L5 form a cemented lens group, the cemented surface S8 is between the fourth lens L4 and the fifth lens L5.

The sixth lens L6 has a positive refractive power, an object side surface S10 of the sixth lens L6 and an image side surface S11 of the sixth lens L6 are both convex.

Moreover, in the embodiment, the first lens L1, the second lens L2, the third lens L3, the fourth lens L4 and the fifth lens L5 are all glass spherical lenses. The sixth lens L6 is a glass aspherical lens.

Relevant parameters of every lens of the optical imaging lens according to the first embodiment are shown in Table 1.

Table 1

| Surface NO. | Surface type | Radius of curvature (mm) | Thickness (mm) | Refractive index | Abbe number |
|---|---|---|---|---|---|
| Object surface | spherical | infinity | infinity | | |
| S1 | spherical | 9.769 | 0.867 | 1.80 | 46.6 |
| S2 | spherical | 3.237 | 2.235 | | |
| S3 | spherical | 32.722 | 0.380 | 1.73 | 54.7 |
| S4 | spherical | 2.093 | 1.227 | | |
| S5 | spherical | 11.437 | 3.173 | 1.90 | 31.3 |
| S6 | spherical | -4.408 | 0.179 | | |
| ST | spherical | infinity | 1.693 | | |
| S7 | spherical | -26.753 | 0.386 | 1.95 | 17.9 |

(continued)

| Surface NO. | Surface type | Radius of curvature (mm) | Thickness (mm) | Refractive index | Abbe number |
|---|---|---|---|---|---|
| S8 | spherical | 4.530 | 1.935 | 1.59 | 68.5 |
| S9 | spherical | -4.530 | 0.073 | | |
| S10 | aspherical | 5.702 | 2.314 | 1.59 | 61.3 |
| S11 | aspherical | -7.627 | 0.680 | | |
| S12 | spherical | infinity | 0.800 | 1.52 | 64.2 |
| S13 | spherical | infinity | 1.899 | | |
| S14 | spherical | infinity | | | |

Aspherical parameters of every lens of the optical imaging lens according to the first embodiment are shown in Table 2.

Table 2

| Surface No. | K | B | C | D | E | F |
|---|---|---|---|---|---|---|
| S10 | 1.747 | -5.974E-03 | 5.309E-04 | -1.467E-04 | 1.776E-05 | -8.182E-07 |
| S11 | -2.123 | -3.392E-03 | 3.243E-04 | -6.631E-05 | 8.355E-06 | 3.089E-07 |

Please refer to the Table 3. Table 3 shows optical characteristics corresponding to the optical imaging lens in the above embodiment, including the effective focal length EFL of a whole system, the total optical length TTL, the maximum field of view FOV, the aperture number F#, and the values corresponding to each of the above expressions.

Table 3

| Expression | Value | Expression | Value |
|---|---|---|---|
| FOV (°) | 200.6 | F# | 2.0 |
| TTL (mm) | 17.841 | ImgH (mm) | 2.803 |
| TTL/ImgH | 6.365 | EFL (mm) | 1.574 |
| LCA | 2.732E-02 | LCA/EFL | 1.736E-02 |
| LSA | 1.010E-02 | LSA/EFL | 6.417E-03 |
| R3/TTL | 1.834 | R5/TTL | 0.641 |
| $(CRA)_{max}$ | 1.083° | TTL/CT3 | 5.623 |
| TTL/T4 | 10.538 | Vd5/Vd4 | 3.819 |
| $|\varphi 10|$ | 23.720° | S10 | 3.136 |
| $|\varphi 11|$ | 21.553° | S11 | 3.201 |
| $|\varphi 10|-\arctan [S10/ (R10^2- S10^2)^{1/2}]$ | -9.646° | $|\varphi 11|-\arctan [S11/ (R11^2-S11^2)^{1/2}]$ | -3.262° |

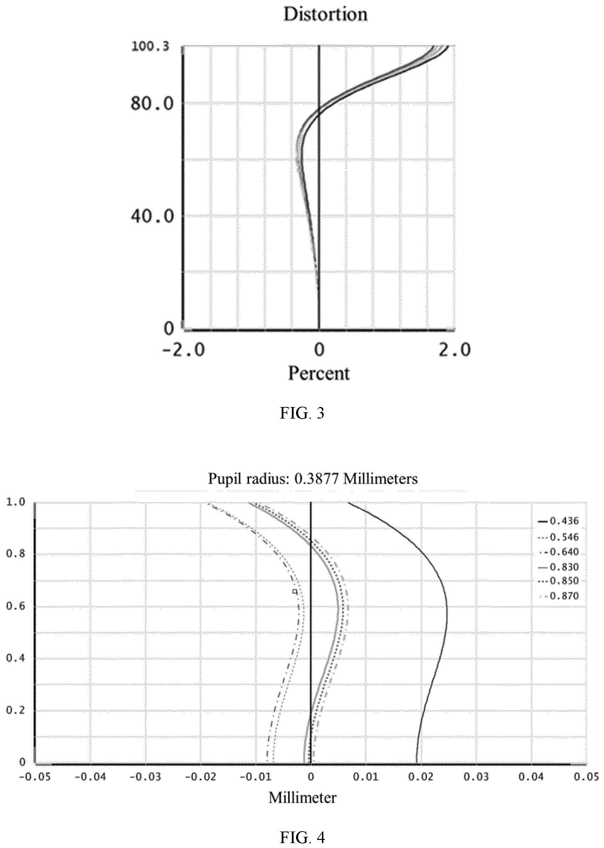

In this embodiment, the field curvature and the distortion of the optical imaging lens are shown in FIG. 2 and FIG. 3 respectively.

As can be seen from FIG. 2, the values of the field curvatures are all falls within a range from -0.07 mm to 0.07 mm, which indicates the field curvature and the astigmatism are well corrected.

As can be seen from FIG. 3, the distortion of the optical imaging lens falls within 0% to 2%, which indicates the distortions of the lens in the field of the center and the edge are relatively small, the distortion is well corrected.

FIGS. 4-6 are diagrams showing the axial chromatic aberrations of the optical imaging lens provided in this embodiment at the same focal plane position in the selected wavebands respectively. As can be seen from FIG. 4 to FIG. 6, in light wavebands of visible light wavebands and near-infrared wavebands of 436nm-870nm, the axial chromatic aberrations of the optical imaging lens provided in this embodiment at the same focal plane position are less than 0.025 mm, indicating that the optical imaging lens has good imaging performance in both visible light wavebands and infrared wavebands.

In summary, compared with prior art, the optical imaging lens provided by the present disclosure at least has the advantages of miniaturization, low distortion, and focusing visible light and near-infrared light in the same image plane, especially, it has good imaging quality in both visible light wavebands and near-infrared light wavebands, which can meet the using requirements of driving monitoring system.

SECOND EMBODIMENT

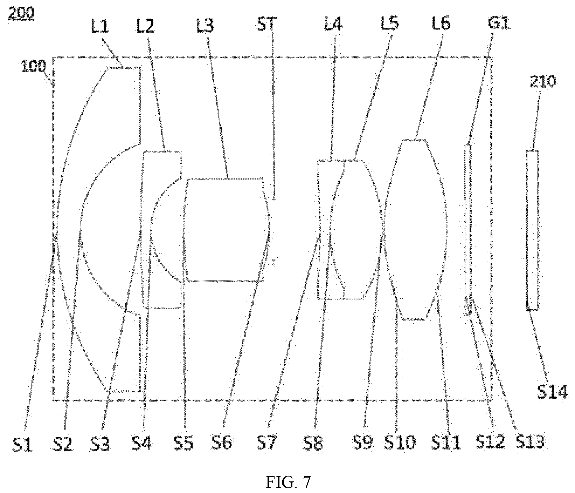

FIG. 7 is a schematic structural diagram of an optical imaging device 200 provided in this embodiment. Please refer to FIG. 7. The optical imaging device 200 includes the optical imaging lens 100 provided in the first embodiment and an imaging element 210. The imaging element 210 may be a CMOS (Complementary Metal Oxide Semiconductor) sensor or a CCD (Charge Coupled Device) sensor.

The imaging device 200 can be a sport camera, a panoramic camera, an in-vehicle camera, and any other form of electronic device with the optical imaging lens.

The imaging device 200 provided in this embodiment includes the optical imaging lens 100, due to the optical imaging lens has the advantages of miniaturization, low distortion, and the optical imaging lens focuses visible light and near-infrared light in the same image plane. So that the imaging device 200 has the advantages of miniaturization, low distortion, and focusing visible light and near-infrared light in the same image plane.

**Claims**

1. An imaging device (200), comprising an optical imaging lens (100) and an imaging element (210), the optical imaging lens (100) from an object side to an image plane (S14) on the imaging element (210) along an optical axis of the optical imaging lens (100), sequentially comprising a first lens (L1), a second lens (L2), a third lens (L3), a stop (ST), a fourth lens (L4), a fifth lens (L5), a sixth lens (L6) and a filter (G1); and the stop (ST) being arranged between the third lens (L3) and the fourth lens (L4);

   the first lens (L1) having a negative refractive power, an object side surface (S1) of the first lens (L1) being convex, an image side surface (S2) of the first lens (L1) being concave;
   the second lens (L2) having a negative refractive power, an object side surface (S3) of the second lens (L2) being convex, an image side surface (S4) of the second lens (L2) being concave;
   the third lens (L3) having a positive refractive power, an object side surface (S5) of the third lens (L3) and an image side surface (S6) of the third lens (L3) being both convex;
   the fourth lens (L4) having a negative refractive power, an object side surface (S7) of the fourth lens (L4) and an image side surface (S8) of the fourth lens (L4) being both concave;
   the fifth lens (L5) having a positive refractive power, an object side surface (S8) of the fifth lens (L5) and an image side surface (S9) of the fifth lens (L5) being both convex; the fourth lens (L4) and the fifth lens (L5) forming a cemented lens group;
   the sixth lens (L6) having a positive refractive power, an object side surface (S10) of the sixth lens (L6) and an image side surface (S11) of the sixth lens (L6) being both convex;
   wherein each of the first lens (L1), the second lens (L2), the third lens (L3), the fourth lens (L4) and the fifth lens (L5) is a glass spherical lens, and the sixth lens (L6) is a glass aspherical lens;
   wherein the optical imaging lens (100) meets the expression:

$$5.6 < TTL/ImgH < 6.4;$$

   where TTL represents a total optical length of the optical imaging lens (100), and TTL is measured to the imaging element (210); and ImgH represents a half of the maximum diameter of an effective pixel area on the image plane (S14) of the optical imaging lens (100); and
   wherein the optical imaging lens (100) is **characterised by** meeting the expressions:

$$1.2 < R3/TTL < 2.4;$$

$$0.6 < R5/TTL < 1.2;$$

   where R3 represents a radius of curvature of the object surface (S3) of the second lens (L2), R5 represents a radius of curvature of the object surface (S5) of the third lens (L3).

2. The imaging device (200) as claimed in claim 1, wherein the optical imaging lens (100) meets the expression:

$$LCA/EFL < 2.500E\text{-}02;$$

where LCA represents a longitudinal chromatic aberration of the optical imaging lens (100) in the light waveband of 436nm-870nm, and EFL represents an effective focal length of the optical imaging lens (100).

3. The imaging device (200) as claimed in claim 1, wherein the optical imaging lens (100) meets the expression:

$$LSA/EFL < 1.500E\text{-}02;$$

where LSA represents a longitudinal spherical aberration of the optical imaging lens (100) in the light waveband of 830nm-870nm, and EFL represents an effective focal length of the optical imaging lens (100).

4. The imaging device (200) as claimed in claim 1, wherein the optical imaging lens (100) meets the expression:

$$0° < (CRA)_{max} < 4°;$$

where $(CRA)_{max}$ represents the maximum incident angle of the chief ray on the image plane (S14).

5. The imaging device (200) as claimed in claim 1, wherein the optical imaging lens (100) meets the expression:

$$5 < TTL/CT3 < 6;$$

where CT3 represents a center thickness of the third lens (L3) on the optical axis.

6. The imaging device (200) as claimed in claim 1, wherein the optical imaging lens (100) meets the expression:

$$9 < TTL/T4 < 12;$$

where T4 represents a distance between the stop (ST) and the fourth lens (L4) on the optical axis.

7. The imaging device (200) as claimed in claim 1, wherein the optical imaging lens (100) meets the expression:

$$3.5 < Vd5/Vd4 < 4.5;$$

where Vd4 represents an abbe number of the fourth lens (L4), and Vd5 represents an abbe number of the fifth lens (L5).

8. The imaging device (200) as claimed in claim 1, wherein the optical imaging lens (100) further meets the expressions:

$$-12° < |\varphi 10|\text{-}arctan[S10/(R10^2 - S10^2)^{1/2}] < 12°;$$

$$-5° < |\varphi 11|\text{-}arctan[S11/(R11^2 - S11^2)^{1/2}] < 5°;$$

where S10 represents a half of an effective diameter of the object side surface (S10) of the sixth lens (L6), and S11 represents a half of an effective diameter of the image side surface (S11) of the sixth lens (L6); $\varphi 10$ represents a dip angle at the half of the effective diameter of the object side surface (S10) of the sixth lens (L6); $\varphi 11$ represents a dip angle at the half of the effective diameter of the image side surface (S11) of the sixth lens (L6); R10 represents a radius of curvature of the object side surface (S10) of the sixth lens (L6), and R11 represents a radius of curvature of the image side surface (S11) of the sixth lens (L6).

9. The imaging device (200) as claimed in any of claims 1-8, wherein the filter (G1) is coated with a visible broadband anti-reflection layer and a near-infrared broadband anti-reflection layer.

10. The imaging device (200) as claimed in any of claims 1-9, wherein the maximum field of view of the optical imaging lens (100) is 200.6°.

11. The imaging device (200) as claimed in any of claims 1-10, wherein TTL/ImgH is 6.365.

12. The imaging device (200)as claimed in claim 4, wherein $(CRA)_{max}$ is 1.083°.

13. The imaging device (200) as claimed in claim 7, wherein Vd5/Vd4 is 3.819.

14. The imaging device (200) as claimed in claim 1, wherein the imaging element (210) is configured for converting an optical image formed by the optical imaging lens (100) into electrical signals.


**Patentansprüche**

1. Eine Abbildungsvorrichtung (200), umfassend eine optische Abbildungslinse (100) und ein Bildelement (210), wobei die optische Abbildungslinse (100) entlang ihrer optischen Achse von einer Objektseite bis zu einer Bildebene (S14) auf dem Bildelement (210) der Reihe nach umfasst: eine erste Linse (L1), eine zweite Linse (L2), eine dritte Linse (L3), eine Blende (ST), eine vierte Linse (L4), eine fünfte Linse (L5), eine sechste Linse (L6) und einen Filter (G1); und die Blende (ST) zwischen der dritten Linse (L3) und der vierten Linse (L4) angeordnet ist;

die erste Linse (L1) eine negative Brechkraft aufweist, wobei eine Objektseite (S1) der ersten Linse (L1) konvex und eine Bildseite (S2) der ersten Linse (L1) konkav ist;
die zweite Linse (L2) eine negative Brechkraft aufweist, wobei eine Objektseite (S3) der zweiten Linse (L2) konvex und eine Bildseite (S4) der zweiten Linse (L2) konkav ist;
die dritte Linse (L3) eine positive Brechkraft aufweist, wobei sowohl eine Objektseite (S5) als auch eine Bildseite (S6) der dritten Linse (L3) konvex sind;
die vierte Linse (L4) eine negative Brechkraft aufweist, wobei sowohl eine Objektseite (S7) als auch eine Bildseite (S8) der vierten Linse (L4) konkav sind;
die fünfte Linse (L5) eine positive Brechkraft aufweist, wobei sowohl eine Objektseite (S8) als auch eine Bildseite (S9) der fünften Linse (L5) konvex sind; die vierte Linse (L4) und die fünfte Linse (L5) bilden eine verkittete Linsengruppe;
die sechste Linse (L6) eine positive Brechkraft aufweist, wobei sowohl eine Objektseite (S10) als auch eine Bildseite (S11) der sechsten Linse (L6) konvex sind;
wobei die erste (L1), zweite (L2), dritte (L3), vierte (L4) und fünfte (L5) Linse aus sphärischem Glas bestehen und die sechste Linse (L6) eine asphärische Glaslinse ist;
wobei die optische Abbildungslinse (100) die folgende Bedingung erfüllt:

$$5.6 < TTL/ImgH < 6.4;$$

wobei TTL eine optische Gesamtlänge der optischen Abbildungslinse (100) darstellt, gemessen bis zum Bildelement (210), und ImgH eine Hälfte des maximalen Durchmessers des effektiven Pixelbereichs auf der Bildebene (S14) der optischen Abbildungslinse (100) ist; und
wobei die optische Abbildungslinse (100) durch die Erfüllung der folgenden Bedingung gekennzeichnet ist:

$$1.2 < R3/TTL < 2.4;$$

$$0.6 < R5/TTL < 1.2;$$

wobei R3 einen Krümmungsradius der Objektseite (S3) der zweiten Linse darstellt (L2), und R5 einen Krümmungsradius der Objektseite (S5) der dritten Linse darstellt (L3).

2. Die Abbildungsvorrichtung (200) nach Anspruch 1, wobei die optische Abbildungslinse (100) die folgende Bedingung erfüllt:

$$LCA/EFL < 2.500E\text{-}02;$$

wobei LCA eine longitudinale chromatische Aberration der optischen Abbildungslinse (100) im Wellenlängenbereich von 436 nm bis 870 nm darstellt und EFL die effektive Brennweite der optischen Abbildungslinse (100) ist.

3. Die Abbildungsvorrichtung (200) nach Anspruch 1, wobei die optische Abbildungslinse (100) die folgende Bedingung erfüllt:

$$LSA/EFL < 1.500E\text{-}02;$$

wobei LSA eine longitudinale sphärische Aberration der optischen Abbildungslinse (100) im Wellenlängenbereich von 830 nm bis 870 nm darstellt und EFL die effektive Brennweite der optischen Abbildungslinse (100) ist.

4. Die Abbildungsvorrichtung (200) nach Anspruch 1, wobei die optische Abbildungslinse (100) die folgende Bedingung erfüllt:

$$0° < (CRA)_{max} < 4°;$$

wobei $(CRA)_{max}$ den maximalen Einfallswinkel des Hauptstrahls auf der Bildebene (S14) darstellt.

5. Die Abbildungsvorrichtung (200) nach Anspruch 1, wobei die optische Abbildungslinse (100) die folgende Bedingung erfüllt:

$$5 < TTL/CT3 < 6;$$

wobei CT3 eine mittlere Dicke der dritten Linse (L3) auf der optischen Achse darstellt.

6. Die Abbildungsvorrichtung (200) nach Anspruch 1, wobei die optische Abbildungslinse (100) die folgende Bedingung erfüllt:

$$9 < TTL/T4 < 12;$$

wobei T4 einen Abstand zwischen der Blende (ST) und der vierten Linse (L4) auf der optischen Achse darstellt.

7. Die Abbildungsvorrichtung (200) nach Anspruch 1, wobei die optische Abbildungslinse (100) die folgende Bedingung erfüllt:

$$3.5 < Vd5/Vd4 < 4.5;$$

wobei Vd4 eine Abbe-Zahl der vierten Linse (L4) und Vd5 die Abbe-Zahl der fünften Linse (L5) darstellt.

8. Die Abbildungsvorrichtung (200) nach Anspruch 1, wobei die optische Abbildungslinse (100) zusätzlich die folgende Bedingung erfüllt:

$$-12° < |\varphi 10| - \arctan[S10/(R10^2 - S10^2)^{1/2}] < 12°;$$

$$-5° < |\varphi 11| - \arctan[S11/(R11^2 - S11^2)^{1/2}] < 5°;$$

wobei S10 eine Hälfte eines effektiven Durchmessers der Objektseite (S10) der sechsten Linse (L6) darstellt, und S11 eine Hälfte eines effektiven Durchmessers der Bildseite (S11) der sechsten Linse (L6) darstellt; $\varphi 10$ einen Neigungswinkel bei der Hälfte des effektiven Durchmessers der Objektseite (S10) der sechsten Linse (L6) darstellt, und $\varphi 11$ einen Neigungswinkel bei der Hälfte des effektiven Durchmessers der Bildseite (S11) der sechsten Linse (L6) darstellt; R10 einen Krümmungsradius der Objektseite (S10) der sechsten Linse (L6) darstellt, und R11 den Krümmungsradius der Objektseite (S11) der sechsten Linse (L6) darstellt.

9.  Die Abbildungsvorrichtung (200) nach einem der Ansprüche 1 bis 8, wobei der Filter (G1) mit einer breitbandigen Anti-Reflexionsschicht für sichtbares Licht und einer breitbandigen Anti-Reflexionsschicht für nahes Infrarot beschichtet ist.

10. Die Abbildungsvorrichtung (200) nach einem der Ansprüche 1 bis 9, wobei der maximale Sichtwinkel der optischen Abbildungslinse (100) 200.6° beträgt.

11. Die Abbildungsvorrichtung (200) nach einem der Ansprüche 1 bis 10, wobei TTL/ImgH 6.365 beträgt.

12. Die Abbildungsvorrichtung (200) nach Anspruch 4, wobei $(CRA)_{max}$ 1.083° beträgt.

13. Die Abbildungsvorrichtung (200) nach Anspruch 7, wobei Vd5/Vd4 3.819 beträgt.

14. Die Abbildungsvorrichtung (200) nach Anspruch 1, wobei das Bildelement (210) so konfiguriert ist, dass es ein durch die optische Abbildungslinse (100) erzeugtes optisches Bild in elektrische Signale umwandelt.


**Revendications**

1.  Un dispositif d'imagerie (200), comprenant une lentille d'imagerie optique (100) et un élément d'imagerie (210), la lentille d'imagerie optique (100) allant d'un côté de l'objet à un plan d'image (S14) sur l'élément d'imagerie (210) le long d'un axe optique de la lentille d'imagerie optique (100), comprenant séquentiellement une première lentille (L1), une deuxième lentille (L2), une troisième lentille (L3), une butée (ST), une quatrième lentille (L4), une cinquième lentille (L5), une sixième lentille (L6) et un filtre (G1) ; et la butée (ST) étant disposée entre la troisième lentille (L3) et la quatrième lentille (L4) ;

    la première lentille (L1) a un pouvoir de réfraction négatif, une surface côté objet (S1) de la première lentille (L1) étant convexe, une surface côté image (S2) de la première lentille (L1) étant concave ;
    la deuxième lentille (L2) a un pouvoir de réfraction négatif, une surface côté objet (S3) de la deuxième lentille (L2) étant convexe, une surface côté image (S4) de la deuxième lentille (L2) étant concave ;
    la troisième lentille (L3) a un pouvoir de réfraction positif, une surface côté objet (S5) de la troisième lentille (L3) et une surface côté image (S6) de la troisième lentille (L3) étant toutes deux convexes ;
    la quatrième lentille (L4) a un pouvoir de réfraction négatif, une surface côté objet (S7) de la quatrième lentille (L4) et une surface côté image (S8) de la quatrième lentille (L4) étant toutes deux concave ;
    la cinquième lentille (L5) a un pouvoir de réfraction positif, une surface côté objet (S8) de la cinquième lentille (L5) et une surface côté image (S9) de la cinquième lentille (L5) étant toutes deux convexes ; la quatrième lentille (L4) et la cinquième lentille (L5) formant un groupe de lentilles cimentées ;
    la sixième lentille (L6) a un pouvoir de réfraction positif, une surface côté objet (S10) de la sixième lentille (L6) et une surface côté image (S11) de la sixième lentille (L6) étant toutes deux convexes ;
    dans lesquelles la première lentille (L1), la deuxième lentille (L2), la troisième lentille (L3), la quatrième lentille (L4) et la cinquième lentille (L5) sont des lentilles sphériques en verre, et la sixième lentille (L6) est une lentille asphérique en verre ;
    dans lesquelles la lentille d'imagerie optique (100) répond à l'expression :

    $$5,6 < TTL/ImgH < 6,4 \ ;$$

    à savoir que TTL représente une longueur optique totale de la lentille d'imagerie optique (100), et TTL est mesurée par rapport à l'élément d'imagerie (210) ; et ImgH représente la moitié du diamètre maximal d'une zone de pixel effective sur le plan d'image (S14) de la lentille d'imagerie optique (100) ; et dans lesquelles la lentille d'imagerie optique (100) est **caractérisée par le fait qu'**elle répond aux expressions :

    $$1,2 < R3/TTL < 2,4 \ ;$$

    $$0,6 < R5/TTL < 1,2 \ ;$$

    à savoir que R3 représente un rayon de courbure de la surface de l'objet (S3) de la deuxième lentille (L2), R5 représente un rayon de courbure de la surface de l'objet (S5) de la troisième lentille (L3).

2. Le dispositif d'imagerie (200) selon la revendication 1, dans lequel la lentille d'imagerie optique (100) répond à l'expression :

$$LCA/EFL < 2,500E\text{-}02 \; ;$$

à savoir : LCA représente une aberration chromatique longitudinale de la lentille d'imagerie optique (100) dans la bande d'ondes lumineuses 436nm-870nm, et EFL représente une longueur focale effective de la lentille d'imagerie optique (100).

3. Le dispositif d'imagerie (200) selon la revendication 1, dans lequel la lentille d'imagerie optique (100) répond à l'expression :

$$LSA/EFL < 1,500E\text{-}02 \; ;$$

à savoir : LSA représente une aberration sphérique longitudinale de la lentille d'imagerie optique (100) dans la bande d'ondes lumineuses 830nm-870nm, et EFL représente une longueur focale effective de la lentille d'imagerie optique (100).

4. Le dispositif d'imagerie (200) selon la revendication 1, dans lequel la lentille d'imagerie optique (100) répond à l'expression :

$$0° < (CRA)_{max} < 4° \; ;$$

à savoir que $(CRA)_{max}$ représente l'angle d'incidence maximal du rayon principal sur le plan d'image (S14).

5. Le dispositif d'imagerie (200) selon la revendication 1, dans lequel la lentille d'imagerie optique (100) répond à l'expression :

$$5 < TTL/CT3 < 6 \; ;$$

à savoir que CT3 représente l'épaisseur du centre de la troisième lentille (L3) sur l'axe optique.

6. Le dispositif d'imagerie (200) selon la revendication 1, dans lequel la lentille d'imagerie optique (100) répond à l'expression :

$$9 < TTL/T4 < 12 \; ;$$

à savoir que T4 représente la distance entre la butée (ST) et la quatrième lentille (L4) sur l'axe optique.

7. Le dispositif d'imagerie (200) selon la revendication 1, dans lequel la lentille d'imagerie optique (100) répond à l'expression :

$$3,5 < Vd5/Vd4 < 4,5 \; ;$$

à savoir que Vd4 représente un nombre d'abbe de la quatrième lentille (L4), et Vd5 représente un nombre d'abbe de la cinquième lentille (L5).

8. Le dispositif d'imagerie (200) selon la revendication 1, dans lequel la lentille d'imagerie optique (100) répond en outre aux expressions :

$$-12° < |\varphi 10| - \arctan[S10/(R10^2 - S10^2)^{1/2}] < 12° \; ;$$

$$-5° < |\varphi 11| - \arctan[S11/(R11^2 - S11^2)^{1/2}] < 5° ;$$

à savoir : S10 représente la moitié d'un diamètre effectif de la surface latérale de l'objet (S10) de la sixième lentille (L6), et S11 représente la moitié d'un diamètre effectif de la surface côté image (S11) de la sixième lentille (L6); φ10 représente un angle d'inclinaison à la moitié du diamètre effectif de la surface latérale de l'objet (S10) de la sixième lentille (L6), φ11 représente un angle d'inclinaison à la moitié du diamètre effectif de la surface côté image (S11) de la sixième lentille (L6) ; R10 représente un rayon de courbure de la surface latérale de l'objet (S10) de la sixième lentille (L6), et R11 représente un rayon de courbure de la surface côté image (S11) de la sixième lentille (L6).

9. Le dispositif d'imagerie (200) selon l'une des revendications 1 à 8, dans lequel le filtre (G1) est recouvert d'une couche antireflet à large bande dans le visible et d'une couche antireflet à large bande dans le proche infrarouge.

10. Le dispositif d'imagerie (200) selon l'une des revendications 1 à 9, dans lequel le champ de vision maximal de la lentille d'imagerie optique (100) est de 200,6°.

11. Le dispositif d'imagerie (200) selon l'une des revendications 1 à 10, dans lequel TTL/ImgH est de 6,365.

12. Le dispositif d'imagerie (200) selon la revendication 4, dans lequel $(CRA)_{max}$ est de 1,083°.

13. Le dispositif d'imagerie (200) selon la revendication 7, dans lequel Vd5/Vd4 est de 3,819.

14. Le dispositif d'imagerie (200) selon la revendication 1, dans lequel l'élément d'imagerie (210) est configuré pour convertir une image optique formée par la lentille d'imagerie optique (100) en signaux électriques.

FIG. 1

Field curvature

FIG. 2

## Distortion

FIG. 3

## Pupil radius: 0.3877 Millimeters

FIG. 4

Pupil radius: 0.3880 Millimeters

Millimeter

FIG. 5

Pupil radius: 0.3904 Millimeters

Millimeter

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911382075X
- CN 110161662 A
- CN 109407279 A
- US 20190179119 A1